# EUROPEAN PATENT APPLICATION

(11) **EP 4 198 904 A1**
(43) Date of publication of application: **21.06.2023**
(21) Application number: 22154439.8
(22) Date of filing: 01.02.2022
(51) Int. Cl.: G06T 11/00

(54) **GATING-FREE MOTION COMPENSATION**

(30) Priority: 17.12.2021 US 202163290907 P
(71) Applicant: Koninklijke Philips N.V., 5656 AG Eindhoven (NL)
(72) Inventor: KABUS, Sven, Eindhoven (NL); PERKINS, Amy, Eindhoven (NL); KRUIS, Matthijs Ferdinand, Eindhoven (NL); BIPPUS, Rolf-Dieter, Eindhoven (NL)
(74) Representative: Philips Intellectual Property & Standards

(57) **Abstract**

A method and a system for reconstructing a motion-compensated computed tomography image are provided, as well as an imaging arrangement for acquiring a motion-compensated computed tomography image, and a computer program for carrying out the method. The method for reconstructing a motion-compensated computed tomography image of a subject comprises: receiving projection image data of the subject, selecting portions of the projection image data, and reconstructing each of the selected portions into a volumetric slab image. The method further comprises defining a reference using at least one of the slab images, registering the reconstructed slab images onto the reference to obtain slab registration parameters, and forming the motion-compensated volumetric image of the subject using the slab registration parameters.

## Description

### FIELD OF THE INVENTION

The invention generally relates to medical image reconstruction. In particular, but not exclusively, the invention relates to motion compensation in computed tomography image reconstruction.

### BACKGROUND OF THE INVENTION

In medical imaging, techniques such as computed tomography (CT) are used to visualize patient anatomy. A CT imaging system generally includes a source of radiation such as x-ray radiation mounted on a rotatable gantry opposite a detector array including one or more rows of detector pixels. The x-ray source rotates around an examination region located between the x-ray tube and the detector array and emits radiation that traverses the examination region and a subject disposed therein. The detector array detects radiation that traverses the examination region and generates projection data indicative of the examination region and the object or subject disposed therein. The projection data is reconstructed to generate volumetric image data indicative of subject. The volumetric image data can be processed to generate one or more images that include the scanned portion of the subject.

4D-CT imaging is routinely used in radiation oncology. In 4D-CT imaging, a series of 3D volumetric images of the subject are acquired over a period of time. This type of imaging can support visualization of the motion of patient anatomy. This is particularly helpful when a region of interest, such as a tumor, is subject to regular and involuntary motion such as respiratory and cardiac motion. On the basis of a respiratory-phase based gating, the motion of a lung tumor can be followed over respiratory time. Precise radiotherapy treatment planning, however, requires a static 3D image of sufficiently high quality. Patient motion, and particularly cardiac and respiratory motion, can lead to image blurring and need to be compensated for.

In current clinical workflow, protocols for constructing a 3D-CT image from the 4D-CT image data require sorting, also called gating or binning, of the acquired projection data into a number of pre-defined motion phases, also called gates or bins, before any kind of a static image can be computed. One option is to select a single motion gate or bin, or a few similar gates, out of the 4D-CT, but this is characterized by limited image quality. It is therefore beneficial to align multiple or all gates with each other and to combine them into a single motion-free image of diagnostic image quality.

However, binning the acquired data into motion phases and aligning multiple gates still suffers from motion blurring, specially for respiratory motion. During image acquisition, a subject may take deeper and shallower breaths within each breathing cycle. Data of these different breaths will be combined in a single phase-based gate causing blurring with each gate. In-gate blurring reduces image quality, and cannot be compensated when aligning the respiratory gates.

### SUMMARY OF THE INVENTION

The current invention seeks to provide an improved approach for motion compensation in CT image reconstruction. The invention further seeks to address the need for an approach for motion compensation in CT image reconstruction that does not require, or at least reduces the need for gating data according to regular subject motion.

Thereto a method and a system for reconstructing a motion-compensated computed tomography image of a subject are provided, as well as an imaging arrangement for acquiring a motion-compensated computed tomography image of a subject, and a computer program for carrying out the method.

The method for reconstructing a motion-compensated computed tomography image of a subject comprises: receiving projection image data of the subject, selecting portions of the projection image data, and reconstructing each of the selected portions into a volumetric slab image. The method further comprises defining a reference using at least one of the slab images, registering the reconstructed slab images onto the reference to obtain slab registration parameters, and forming the motion-compensated volumetric image of the subject using the slab registration parameters. The method is preferably computer-implemented or implemented by other suitable calculation means.

According to one aspect, forming the motion-compensated image may comprise registering the volumetric slab images onto the reference and combining the registered slab images. The registered images can be combined by, for example, averaging the images, by calculating a weighted average of the images, or by calculating a median image. In accordance with this aspect, in an option, substantially all volumetric slab images are registered onto the reference and combined to form the motion-compensated image. In another option, a subset of the volumetric slab images is selected, registered, and combined to form the motion-compensated image.

According to another, alternative aspect, forming the motion-compensated image may comprise deformable image reconstruction which is performed on the projection image data.

In an embodiment, the method can be performed iteratively. In such an embodiment, the motion-compensated volumetric image of the subject is defined as an updated reference and the steps of registering the reconstructed slab images onto the reference and forming the motion-compensated volumetric image are repeated until a predefined stopping criterium has been reached. Such a stopping criterium can, for example, be a predefined number of repetitions, a predefined calculation time span, or the amount of change between updated references reaching a threshold. An iterative execution of the method can provide a further improvement of the quality of the final motion compensated volumetric image of the subject. An additional option in this approach is that image reconstruction can start during image acquisition as soon as at least two portions of projections of projection image data can be selected. This has the advantage that image reconstruction can start during image acquisition without the need to wait for the full CT scan to complete.

The registration of the method may comprise one or more of: an elastic deformation, and a rigid deformation. A rigid deformation can, for example, be a translation, a rotation, or a combination thereof. An elastic deformation can, for example, be represented by a deformation vector field or by a set of splines. Preferably, the registration comprises a rigid transformation followed by an elastic deformation.

Preferably, the reference is a reference image. Such a reference image may, for example, be defined by one or more of: selecting one of the slabs, calculating an average image of two or more slabs, calculating a median image of two or more of the slabs, and calculating a weighted combination of two or more of the slabs.

Preferably, the projection image data of the subject is received from one or more of: a computed tomography imaging apparatus, an imaging data storage device, and database such as a dedicated imaging data storage database, hospital database or patient record database.

In an alternative or additional option, a change metric is computed for a region of interest in the subject in addition to the slab registration parameters. This change metric indicates the movement or amount of deformation of the region of interest in the registered slab in comparison to the reference. Such a change metric can be a scalar, for example indicating the amount of movement, change in volume, or other deformation. Alternatively, the change metric can also be vector, for example indicating both amount and direction of movement of the region of interest.

In a particularly advantageous option, the volumetric slab images are ordered in sequence of the acquisition time. This allows the change metric for the region of interest to be provided as function of change over time for the region of interest.

The system for reconstructing a motion-compensated computed tomography image of a subject comprises an input configured to receive projection image data of the subject, and a reconstruction processor. The reconstruction processor is configured to: select portions of the projection image data, reconstruct each of the selected portions into a volumetric slab image,
define a reference using at least one of the slab images, register the reconstructed slab images onto the reference to obtain slab registration parameters, and form the motion-compensated volumetric image of the subject using the slab registration parameters. Preferably, the system further comprises a display for displaying at least part of the motion-compensated volumetric image. Displaying the image can assist the physician in diagnosing the patient and preparing a treatment plan.

The arrangement for acquiring a motion-compensated computed tomography image of a subject comprises a computed tomography imaging apparatus for acquiring projection image data of the subject and the above described system for reconstructing the motion-compensated computed tomography image of the subject.

The computer program product comprises instructions that cause a processor to carry out the above described method, when the computer program is executed.

An advantage of the current invention is that a motion compensated CT image is obtained, without the need to acquire a regular motion signal from the subject. In particular, it is no longer needed to use belts and other instrumentation to measure respiratory and/or cardiac motion. Such devices may increase procedure complexity and cause patient discomfort. Moreover in case of a belt-device, the detected respiratory phase at the scanned axial position can be different from the axial position where the belt is located.

Another advantage lies in that a motion compensated CT image is obtained wherein irregular subject motion is also compensated. Because the image slabs are each registered individually instead of combining them into groups or bins, each individual motion in a slab is registered onto the reference. This also allows compensation for motion such as a small shift of the subject or involuntary irregular motion such as bowl movements. Alternatively, part of the acquired data where the subject has an unexpected or above average amount of movement, for example due to coughing, can be excluded when forming the motion-compensated volumetric image of the subject to improve image quality.

A further advantage lies in that a motion compensated CT image with improved quality is obtained without exposing the patient to certain breathing instructions. In the current motion compensation approach, gating or binning is not used. Therefore the need for the patient to breath regularly is lessened. This improves patient comfort.

### BRIEF DESCRIPTION OF THE FIGURES

In the following drawings:
Figure 1 schematically and exemplarity illustrates an arrangement for acquiring a motion-compensated computed tomography image of a subject comprising a system for reconstructing a motion-compensated CT image of the subject.
Figure 2 schematically illustrates projection data acquisition and volumetric image reconstruction of a CT image.
Figures 3A and 3B schematically illustrates two alternative examples of a method for reconstructing a motion-compensated computed tomography image of a subject.
Figure 4 schematically illustrates another example of a method for reconstructing a motion-compensated computed tomography image of a subject.
Figure 5 schematically illustrates a further example of a method for reconstructing a motion-compensated computed tomography image of a subject.

### DETAILED DESCRIPTION OF THE INVENTION

In the examples below, a computed tomography image is acquired for a subject. Such a subject can be a human being, particularly a human patient requiring imaging for medical purposes. However, alternative subjects are also envisaged, for example animals such as pets or livestock. The approach according to the invention can also be applied to inanimate object having intrinsic motion that cannot be paused during image acquisition.

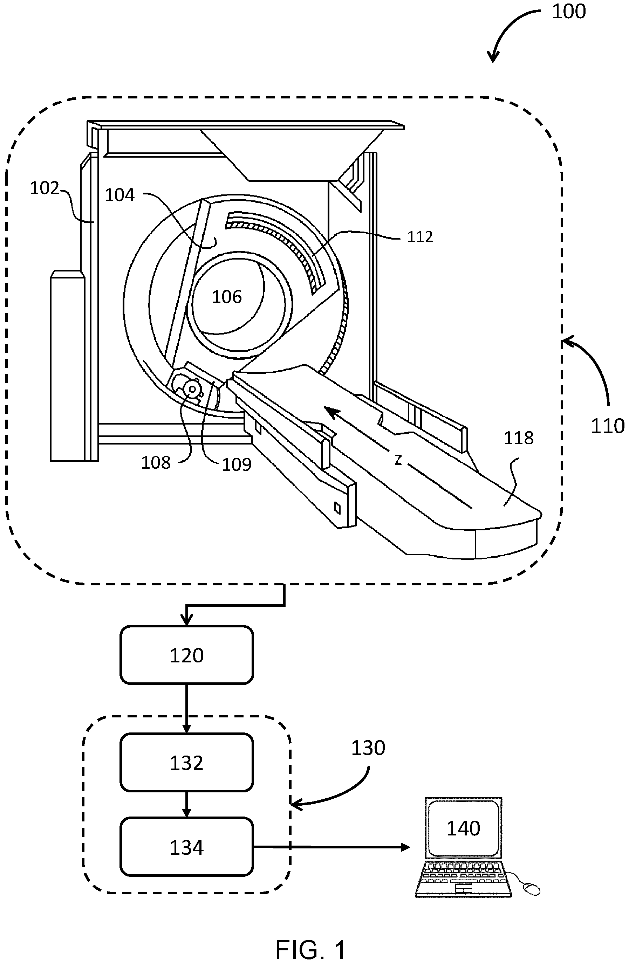

Figure 1 illustrates an imaging arrangement 100 for acquiring a computed tomography image of a subject.

The imaging arrangement 100 comprises an imaging apparatus 110 such as a computed tomography (CT) scanner. The computed tomography imaging apparatus 110 includes a stationary gantry 102 and a rotating gantry 104, which is rotatably supported by the stationary gantry 102. When the system is in operation, the rotating gantry 104 rotates around an examination region 106 about a longitudinal or z-axis. A radiation source 108, such as an x-ray tube, is supported by and rotates with the rotating gantry 104 and emits radiation that traverses the examination region 106. A source collimator 109 collimates the emitted radiation to form a generally fan, wedge, or cone shaped radiation that traverses the examination region 106.

A support 118, such as a couch is provided to support an object or subject to be imaged in the examination region 106. The support 118 is movable along the z-axis in coordination with the rotation of the rotating gantry 104 to facilitate the desired scanning trajectory, preferably a helical scanning trajectory.

A radiation sensitive detector array 112 detects radiation emitted by the radiation source 108 that traverses the examination region 106 and generates projection image data 120 indicative of the detected radiation. The illustrated radiation sensitive detector array 112 includes one or more rows of radiation sensitive photosensor pixels along the z-axis.

The imaging arrangement 100 further comprises a system for reconstructing a motion-compensated CT image 130, which reconstructs the projection image data 120 and generates volumetric image data indicative of the examination region 106, including structure of a subject disposed therein. One or more images can be generated from the volumetric image data. In this example, the imaging arrangement 100 also comprises an optional display 140, for displaying the one or more generated images. Such a display 140 can, for example, be a screen of a laptop or personal computer, a separate screen for image viewing, or a console provided as part of the imaging apparatus 110.

The system for reconstructing the motion-compensated CT image 130 comprises and input 132 for receiving the projection image data 120 and a reconstruction processor 134. The input 130 is configured to receive the projection image data 120 directly from the CT imaging apparatus 110 during or after the data is acquired. Alternatively, the projection data 120 can be stored an imaging data storage device, or a database such as a dedicated imaging data storage database, hospital database or patient record database. In this option the reconstruction system 130 can operate independently from the imaging apparatus 110 and the input is configured to receive the data from the data storage device or database.

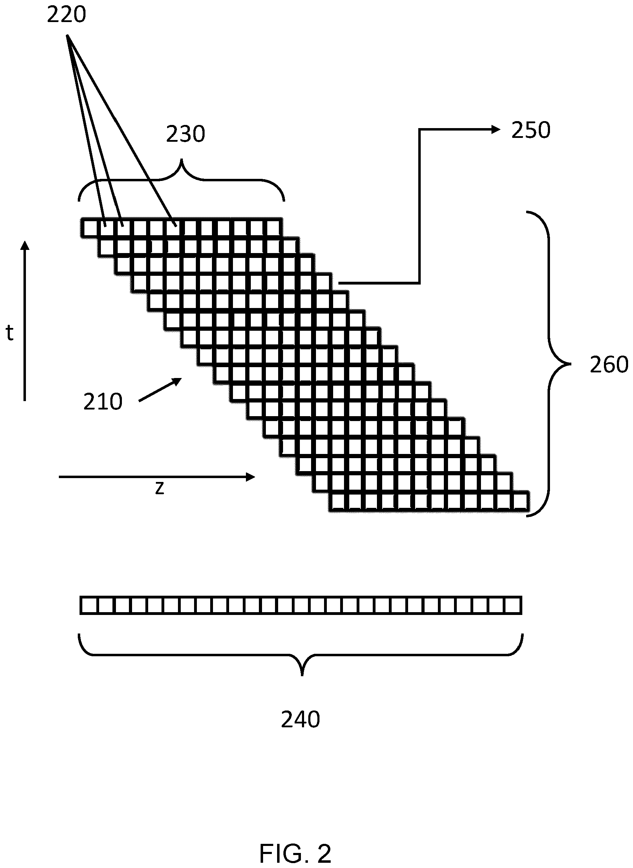

Figure 2 schematically illustrates projection data acquisition and volumetric image reconstruction of a CT image. Data is acquired as the subject moves through the imaging apparatus on the support. A commonly used way to do this is by means of a helical scanning trajectory. In a helical scanning trajectory the support moves the subject through the examination region in a continuous manner while the radiation source and detector array rotate around the subject. Alternatively, the movement of the table can be stopped at each scanning position and the radiation source and detector array then rotate around with the subject in a stationary position. Such a step-and-shoot approach, however, is more cumbersone to execute and less comfortable for the subject. In Figure 2, the couch position z is shown on the horizontal axis as a distance relative to the end of the support. Time t is shown on the vertical axis and increases in the upwards direction.

Projection data is collected in portions of angular rotation of the source and detector around the subject When the most prominent subject motion that needs to be compensated for is repiratory motion, such a portion is preferably at least 180°. Having portions of data of at least 180° has the advantage that each portion can be selected and reconstructed into an image of sufficient quality to display to a user. However, having portions of this degree of rotation is not essential to the current reconstruction approach. When a higher timing resolution is required, for example when the most prominent subject motion that needs to be compensated for is cardiac motion, the portions can also be less than 180°. The portions of projection data can be adjacent in acquisition angle, but can also partially overlap. Such a portion of projection data represents the data acquired for the subject at a certain couch position and moment in the acquisition time. Alternatively, the portions of projection data can be defined using a time window within the acquisition time span or a time window covering an average position of the support.

Figure 2 shows a grid of volumetric image data 210 that is divided into slices 220. As explained with reference to Figure 1, the radiation sensitive detector array of the imaging has one or more rows of photosensitive pixels along the z-axis. Each pixel acquires projection data as the detector rotates around the subject and when a predefined rotation of preferably more than 180° has been completed, this data can be reconstructed into a 2D cross sectional volumetric image of the subject. This image is referred to as a slice 220. The adjacent pixels of the array each provide an adjacent slice. The field of view 230 of the detector is mainly determined by the number of pixels spanning the length of the examination region. The total coverage of the subject in the formed volumetric CT image 240 is increased by moving the support and acquiring data at subsequent positions of the support. Preferably, multiple slices of data are acquired for each position of the subject support. This manner of data acquisition is referred to as oversampled image acquisition. Acquiring more slices per bed position improves image quality, but also requires a slower speed of the support for the subject and increases the acquisition time. In practice, therefore a trade-off is made between the amount of projection data that is acquired and the scan speed.

From the portions of projection image data that are acquired, each can be selected and reconstructed into a separate volumetric image. This 3D CT image is a volumetric slab image 230. The slab image is a volumetric image of the subject for the selected couch position and moment in the acquisition time. In Figure 2, the slab images are shown as rows of slices 250. The slabs here are illustrated as being adjacent in time, but alternatively they can also partially overlap or a time gap may be left in between. The series of slabs 260 together can form a 4D-CT image.

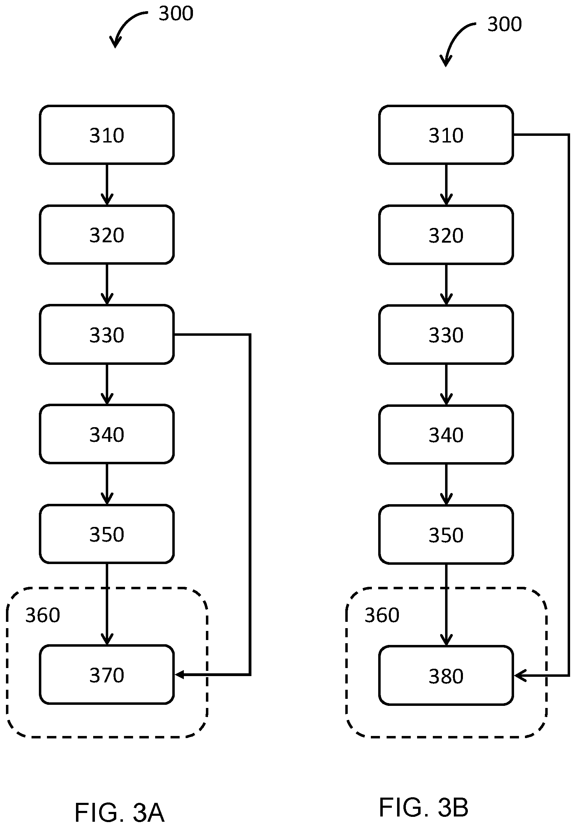

Figures 3A and 3B both schematically and exemplarily illustrate a method 300 for reconstructing a motion-compensated computed tomography image of a subject. The figures each illustrate alternative exemplary embodiments of such a method.

In each of the examples of figures the method for reconstructing the image starts with receiving projection image data 310 of the subject. This data can, for example, be received from a computed tomography imaging apparatus, an imaging data storage device, or a database such as a dedicated imaging data storage database, hospital database or patient record database. Next, portions of the projection image data are selected 320.

In the following step, each of the selected portions of image projection data is reconstructed into a volumetric slab image 330. After the volumetric slab images have been reconstructed, a reference is defined 340 using at least one of these slab images. The reference can be a reference image. Such a reference image can be defined in several ways. For example, one of the slabs can be selected as the reference image, an average image of two or more slabs can be calculated, a median image of two or more of the slabs can be calculated, or a weighted combination of two or more of the slabs can be calculated. Alternatively, the reference can be defined using a symmetric registration of two slabs or using a group-wise type of registration of multiple slabs. In a preferred option, the reference is a reference image, which is defined by calculating the average image of all of the reconstructed slab images.

Next, the reconstructed slab images are registered onto the reference to obtain slab registration parameters 350. The registration method can be an elastic deformation, a rigid deformation, or a combination thereof. A rigid deformation can, for example, be a translation, a rotation, or a combination thereof. For a translation, the registration parameters can be a vector indicating the direction and amount in which the slab has to be moved. For a rotation, the registration parameters can be a degree of rotation in combination with the center point for the rotation and the rotation plane. An elastic deformation can, for example, be represented by a deformation vector field or by a set of splines as registration parameters. Preferably, the registration comprises a rigid transformation followed by an elastic deformation.

The motion-compensated volumetric image is then formed using the obtained slab registration parameters 360. The motion compensated volumetric image in these embodiments is a 3D-CT image.

In the exemplary alternative shown in in Figure 3A, forming the motion-compensated images comprises registering the volumetric slab images onto the reference and combining the registered slab images 370. To form the image, the registered images can be combined by, for example, averaging the registered slab images, by calculating a weighted average of these images, or by calculating a median image. This option has the advantage that no additional reconstruction of projection data is required. It is therefore faster and more efficient in calculation.

In this alternative, substantially all volumetric slab images can be registered onto the reference and combined to form the motion-compensated image. Because each slab image is registered with its own parameters, both regular and irregular motion can be compensated for. In another option, the registration parameters for the slab images can be analyzed to determine if the subject has an unexpected or above average amount of movement for the slab. Such a movement can, for example, be coughing, a sudden arm or leg movement, or a shift of the bladder or bowl. A subset of the volumetric slab images is then selected for forming the motion-compensated image, by excluding slabs with such a movement.

In the exemplary alternative shown in Figure 3B, forming the motion-compensated image comprises deformable image reconstruction which is performed on the projection image data 380. Deformable image registration has the advantage of providing better image quality with sharper edges.

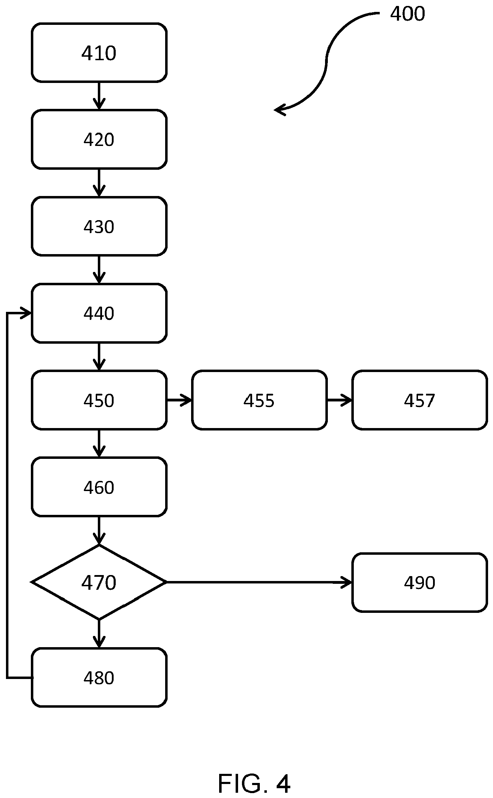

Figure 4 schematically illustrates another embodiment of the method for reconstructing a motion-compensated computed tomography image of a subject. The method of Figure 4 shows a combination of several optional additional method steps. Although these steps are all illustrated in combination, this is not necessary and merely represents an advantageous option. The optional additional steps can also be implemented separately or in combinations of two or more.

In the exemplary method of Figure 4, reconstructing the motion-compensated CT image starts with receiving projection image data 410 of the subject and selecting portions of the projection data 420. each of the selected portions of image projection data is reconstructed into a volumetric slab image 430.

In an advantageous option, the reconstructed slab portions are ordered in sequence of acquisition time. This can be done by selection the portions of data in sequence of acquisition time and reconstruction the slabs in order of selection of the data portions. Alternatively, the slabs can be provided with an acquisition time stamp during or after reconstruction. With this time stamp the slabs can be sorted into sequence of acquisition time after reconstruction of each of the slabs is complete.

When the method illustrated in Figure 4 is initialized, after the volumetric slab images have been reconstructed, an initial reference is defined 440 using these slab images. Next, the reconstructed slab images are registered onto the reference to obtain slab registration parameters 450 and a motion-compensated volumetric image of the subject is formed using these slab registration parameters 460. In this example, the method is performed in an iterative method to improve the quality of the final motion-compensated volumetric image of the subject. The motion-compensated volumetric image of the subject is defined as an updated reference 480 and the steps of registering the reconstructed slab images onto the reference 450 and forming the motion-compensated volumetric image 460 are repeated until a predefined stopping criterium has been reached 470. When the stopping criterium has been reached, the formed motion-compensated volumetric image 460 is the motion-compensated 3D-CT image 490 provided by the method.

The predefined stopping criterium can be defined in a number of different ways. For example, the stopping criterium can be a predefined number of repetitions, a predefined maximum calculation time span, or the amount of change between updated references reaching a threshold. When a predefined number of iterations is used, this number should at least be one. Also, a maximum calculation time span should be chosen sufficiently long to allow for at least one iteration. In case a change threshold is used, the motion-compensated image formed in step 460 will be compared to the reference to determine a similarity metric or a difference metric. Such a comparison can be made by measuring voxel displacement, for example maximum or average voxel displacement between the images. Alternatively, a comparison can be made by measuring image similarity, for example maximum or average voxel intensity difference between the images. For comparison of similarity, the stopping criterium will be met when the similarity metric reaches a predefined level that is considered to be high enough. For comparison of difference, the stopping criterium will be met when the difference metric reaches a predefined level that is low enough.

Additional method steps shown in the example of Figure 4, enable tracking of motion or changes of a particular region of interest in the subject. Such a region of interest can be a tumor that needs to be treated or an organ that needs to be spared. Regions of interest can have quite regular motion, such as breathing or cardiac motion, or more irregular motion such as bowl movements. Regions of interest can also move and deform under the influence of motion of nearby organs.

In order to track motion or change, a change metric is computed for the region of interest in the subject, which metric indicates the movement or amount of deformation of the region of interest in the registered slab in comparison to the reference 455. The change metric can be a scalar, for example indicating the amount of movement, change in volume, or other deformation. Alternatively, the change metric can also be vector, for example indicating both amount and direction of movement of the region of interest. A change metric can be calculated separately by a voxel-wise comparison between the slab image and the reference. More advantageously, a change metric can be determined from the slab registration parameters. For example, in a deformation vector field a change vector specific to the region of interest is already available.

When the slab images are ordered in sequence of time, as described above, the change metric can also be provided in sequence of time. Thereby the change metric is provided as a function of change over time for the region of interest 457. This information can be displayed to a physician as additional information to support diagnosis or treatment planning.

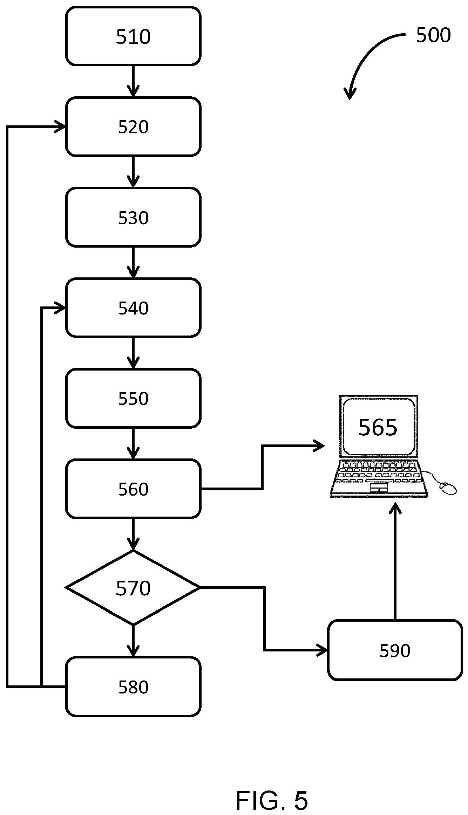

Figure 5 schematically illustrates a further example of a method for reconstructing a motion-compensated computed tomography image of a subject. In this example, like the examples of Figure 4, the method is performed iteratively.

In the method illustrated in Figure 5, the projection image data is received during the acquisition of this data 510. As the data is being received, portions of this data are also being collected for selection 520. Preferably, for this example, selection of the portions is based on a time period for collection. In this way, the portion can be selected by ending its collection when time period for data acquisition is complete. When at least two can be selected at step 520, reconstruction of these portions into volumetric slab images starts 530. In this example, reconstruction can start while the projection data of the subject is still being acquired and it is not necessary to wait until all the projection data has been received. When the at least two slab images have been reconstructed, a reference is defined using at least one of these 540. The reconstructed slab images are then registered onto the defined reference to obtain slab registration parameters 550, and the motion-compensated volumetric image of the subject is formed using these parameters 560.

Next, a check is performed to determine if a predefined stopping criterium has been reached. There can be one or more stopping criteria. For this example, at least one of the stopping criteria is that all projection image data of the subject has been received. If not all data has been received, data acquisition is not yet complete, and more portions can still be selected. The method then returns to step 520 and all portions of additional data compared to the previous iteration are selected. The method continues when at least one additional portion can be selected. The additional selected one or more portions are each reconstructed into volumetric slab images 530. The reference can now be defined using all the available slab images. However, it is preferred that the motion compensated volumetric image of the subject that was formed in the previous iteration is defined as the updated reference 580, 540. This saves computation time and is therefore more efficient. All the available reconstructed slab images are then registered onto the reference to obtain slab registration parameters 550 and an updated motion-compensated volumetric image of the subject is formed 560.

There can be additional stopping criteria to completion of data acquisition. In the example illustrated in Figure 5, additionally it is checked 570 if an optimal image quality has been reached. This can, for example, be done by comparing the reference to the formed motion-compensated volumetric image of the subject and determining if a change metric is below a predefined threshold. If this is not the case, the method is repeated starting from step 540 using the updated reference 580. When all stopping criteria have been reached, the formed updated motion-compensated volumetric image 560 is the final motion-compensated 3D-CT image of the subject 590.

A particular advantage of the exemplary method illustrated in Figure 5, is that the updated motion-compensated volumetric images can be displayed to a user 565 during data acquisition. The user can be a medical practitioner such as a physician or an imaging technician. By checking the displayed updated images, the user can monitor progress of the image acquisition. In an advantageous additional option, a change metric for a region of interest in the subject is also computed as illustrated in Figure 4. This change metric can then also be displayed to the user during data acquisition.

Any of the method steps disclosed herein, may be recorded in the form of a computer program comprising instructions which when executed on a processor cause the processor to carry out such method steps. The instructions may be stored on a computer program product. The computer program product may be provided by dedicated hardware as well as hardware capable of executing software in association with appropriate software. When provided by a processor, the functions can be provided by a single dedicated processor, by a single shared processor, or by a plurality of individual processors, some of which can be shared. Furthermore, embodiments of the present invention can take the form of a computer program product accessible from a computer-usable or computer-readable storage medium providing program code for use by or in connection with a computer or any instruction execution system. For the purposes of this description, a computer-usable or computer readable storage medium can be any apparatus that may include, store, communicate, propagate, or transport the program for use by or in connection with the instruction execution system, apparatus, or device. The medium can be an electronic, magnetic, optical, electromagnetic, infrared, or semiconductor system, or apparatus or device, or a propagation medium. Examples of a computer-readable medium include a semiconductor or solid state memory, magnetic tape, a removable computer diskette, a random access memory "RAM", a read-only memory "ROM", a rigid magnetic disk and an optical disk. Current examples of optical disks include compact disk - read only memory "CD-ROM", compact disk - read/write "CD-R/W", Blu-Ray^{™} and DVD. Examples of a propagation medium are the Internet or other wired or wireless telecommunication systems.

Variations to the disclosed embodiments can be understood and effected by those skilled in the art in practicing the claimed invention, from a study of the drawings, the disclosure, and the appended claims. It is noted that the various embodiments may be combined to achieve further advantageous effects.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for reconstructing a motion-compensated computed tomography image of a subject (300, 400, 500), the method comprising:
- receiving projection image data of the subject (310, 410, 510);
- selecting portions of the projection image data (320, 420, 520);
- reconstructing each of the selected portions into a volumetric slab image (330, 430, 530);
- defining a reference using at least one of the slab images (340, 440, 540);
- registering the reconstructed slab images onto the reference to obtain slab registration parameters (350, 450, 550);
- forming the motion-compensated volumetric image of the subject using the slab registration parameters (360, 460, 560).

2. The method according to claim 1, wherein forming the motion-compensated image comprises registering the volumetric slab images onto the reference and combining the registered slab images (370).

3. The method according to claim 2, wherein a subset of the volumetric slab images is selected, registered, and combined to form the motion-compensated image.

4. The method according to claim 1, wherein forming the motion-compensated image comprises deformable image reconstruction which is performed on the projection image data (380).

5. The method according to claim any of claims 1-4, wherein the motion-compensated volumetric image of the subject is defined as an updated reference (480, 580) and the steps of registering the reconstructed slab images onto the reference (450) and forming the motion-compensated volumetric image (460, 560) are repeated until a predefined stopping criterium has been reached (470, 570).

6. The method according to claim 5, wherein the projection image data is received during acquisition of this data (510) and the method for reconstruction starts when at least two portions of projection image data can be selected (520).

7. The method according to any of claims 1-6, wherein the registration comprises one or more of: an elastic deformation, and a rigid deformation.

8. The method according to any of claims 1-7, wherein the reference is a reference image, which is defined by one or more of: selecting one of the slabs, calculating an average image of two or more slabs, calculating a median image of two or more of the slabs, and calculating a weighted combination of two or more of the slabs.

9. The method according to any of claims 1-8, wherein the projection image data of the subject is received from one or more of: a computed tomography imaging apparatus (110), an imaging data storage device, a cloud-based imaging data service, and database such as a dedicated imaging data storage database, hospital database or patient record database.

10. The method according to any of claims 1-9, wherein, in addition to the slab registration parameters, a change metric is computed for a region of interest in the subject, which change metric indicates the movement or amount of deformation of the region of interest in the registered slab in comparison to the reference (455).

11. The method according to claim 10, wherein the volumetric slab images ordered in sequence of the acquisition time, and the change metric for the region of interest is provided as function of change over time for the region of interest (457).

12. A system for reconstructing a motion-compensated computed tomography image (130) of a subject, comprising:
- an input (132) configured to receive projection image data (120) of the subject; and
- a reconstruction processor (134), which is configured to:
- select portions of the projection image data;
- reconstruct each of the selected portions into a volumetric slab image;
- define a reference using at least one of the slab images;
- register the reconstructed slab images onto the reference to obtain slab registration parameters; and
- form the motion-compensated volumetric image of the subject using the slab registration parameters.

13. The system according to claim 12, further comprising a display (140) for displaying at least part of the motion-compensated volumetric image.

14. Imaging arrangement (100) for acquiring a motion-compensated computed tomography image of a subject, comprising:
- a computed tomography imaging apparatus (110) for acquiring projection image data (120) of the subject; and
- the system (130) according to of any of claims 12-13 for reconstructing the motion-compensated computed tomography image of the subject.

15. A computer program product comprising instructions for causing a processor to carry out the method according to any of claims 1-11, when the computer program is executed.
